# EUROPEAN PATENT APPLICATION

(11) **EP 2 824 898 A1**
(43) Date of publication of application: **14.01.2015**
(21) Application number: 13175684.3
(22) Date of filing: 09.07.2013
(51) Int. Cl.: H04M 1/725, H04M 1/60

(54) **Battery powered mobile device for detecting a time difference**

(71) Applicant: AMS AG, 8141 Unterpremstätten (AT)
(72) Inventor: Jones, Oliver, 8042 Graz (AT)
(74) Representative: Epping - Hermann - Fischer

(57) **Abstract**

In one embodiment a battery powered mobile device (10) for detecting a time difference has a generator (MG) for generating an ultrasonic signal (Su), a detector (MD) for detecting a reflected signal (Sr), the reflected signal (Sr) depending on a reflection of the ultrasonic signal (Su) off an object (11), and a control unit (CTL) connected to the generator (MG) and to the detector (MD). The control unit (CTL) has an output for providing a control signal (Sc) as a function of a time difference between the ultrasonic signal (Su) and the reflected signal (Sr).

## Description

The invention relates to a battery powered mobile device for detecting a time difference.

Battery powered mobile devices such as mobile or cordless phones, personal digital assistance, PDA, handheld devices, eBook readers etc. have been recently equipped with applications offering a wide variety of functionality to the user. A lot of effort has been spent on elaborating user interfaces of these applications in order to simply their operation and enhance the user's experience. Thereby, a need has arisen to adapt the user interface of such devices to the actual usage scenario, e.g. the user is in a phone call and uses the devices near his ear or the user holds the device in his hand and executes some organizer functionality. Therefore, a need for information regarding the actual position of the device in relation, for instance, to its user exists.

In known implementations this need is realized using infrared sensing technology or capacitive sensing technology. However, infrared technology has limitations depending on the colour or texture of the object targeted and under certain conditions may not guarantee expected behaviour. Capacitive sensing is limited in the sensing distance. Furthermore, detection may be degraded in the presence of metallic elements.

It is therefore an objective of the present invention to provide a battery powered mobile device which enhances measuring of a distance between the device and any object or obstruction.

The objective is achieved by the subject-matter of the independent patent claim. Embodiments and developments of the invention are defined in the dependent claims.

In one embodiment a battery powered mobile device for detecting a time difference has a generator for generating an ultrasonic signal, a detector for detecting a reflected signal and a control unit which is connected to the generator and to the detector. The reflected signal depends on a reflection of the ultrasonic signal off an object. The control unit has an output for providing a control signal as a function of a time difference between the ultrasonic signal and the reflected signal.

The generator generates the ultrasonic signal. Reflection of the ultrasonic signal off an object results in the reflected signal which is detected in the detector. The control unit calculates the time difference between the ultrasonic signal and the reflected signal and provides the control signal accordingly.

Using the ultrasonic signal and its reflection the time difference between these signals can be detected and subsequently be used for measuring the distance between the device and the object. By this basic time measurement an absolute distance can be measured in a simple way.

Thereby, the object can be any obstruction like the user's head or cheek or the device's carry case or the surface of a table, etc.

In another embodiment the ultrasonic signal comprises a frequency higher than 20 KHz.

The generator is prepared to adapt the frequency of the ultrasonic signal depending on the reflected signal by means of respective driving by the control unit.

In a further development the control signal comprises a number of counts amounting to the time difference between generation of the ultrasonic signal and reception of the reflected signal.

In another embodiment the generator and the detector are arranged adjacent to each other.

This realization further simplifies calculation of a difference based on the control signal as a potential spacing between detector and generator does not have to be taken into account.

In another development the generator comprises a speaker or a microphone adapted to generate ultrasonic frequencies.

Either a speaker or a microphone having a membrane that can be exited such that it emits a signal having ultrasonic frequencies can be used to implement the generator.

In an exemplary implementation, generation of these frequencies relies on the mechanical breakdown of the speaker where only the core of the speaker moves and the skirt remains still. Alternatively, the breakdown of the microphone membrane, which when driven with an appropriate signal can generate this high frequency wave, is used.

In a further development the speaker of the generator is further adapted to generate audio frequencies.

When using a speaker in an implementation of the generator the speaker in this embodiment is adapted to provide the ultrasonic signal and also to generate audible audio frequencies.

Thereby, advantageously the generator's speaker can be reused in a communication device for telephone functionality or music playback.

In another embodiment the generator further comprises a speaker driver circuit coupled to the speaker or microphone and a pulse generator circuit coupled to the speaker driver circuit. The pulse generator circuit is controlled by the control unit.

Driven by the control unit, the pulse generator circuit generates a pulsed signal which is used within the speaker driver circuit to excite the membrane of the speaker or microphone such that the ultrasonic signal is provided.

In another embodiment the detector comprises a speaker or a microphone adapted to be excited by ultrasonic frequencies.

In this embodiment the membrane of a microphone or a speaker is used to detect the ultrasonic frequencies of the reflected signal and to convert these frequencies into a signal.

In a development the microphone of the detector is further adapted to be excited by audio frequencies.

In this embodiment the microphone is used to implement the detector functionality. The same microphone is reused to detect audio frequencies, like speech or music.

Advantageously, the microphone can be reused for different functionalities, which reduces the need for extra space on the surface of a mobile device which consequently can be realized in a smaller size.

In another embodiment the detector further comprises a preamplifier circuit coupled to the speaker or the microphone and a band pass filter circuit connected to the preamplifier circuit. The band pass filter circuit is controlled by the control unit.

The reflected signal detected by the speaker or microphone is converted to a signal which is preamplified and filtered and provided to the control unit.

In one development the generator and the detector are realized in one component.

In this implementation, the membrane either of a speaker or of a microphone is used to realize both, i.e. the functionality of the generator and the detector in just one component.

This realization achieves a further reduction in size.

In another embodiment the control unit comprises a timer component for calculation of the time difference between the ultrasonic signal and the reflected signal.

The timer component provides the reference counts which are used to compute the difference in time between the ultrasonic signal and the reflected signal.

In a development the device further has as communication unit for communicating with another communications device.

The communication unit comprises at least means for transmitting and means for receiving radio frequencies.

The communication unit realizes communication functionality using radio frequencies according to standards e.g. GSM, UMTS, WLAN or the like which are well known to a man skilled in the art.

In another embodiment the battery powered mobile device has a distance conversion unit connected to the control unit. Therein, the distance conversion unit is enabled to provide a distance indication signal as a function of the control signal. The distance indication signal is indicative of a distance between the device and the object.

By means of the difference in time provided by the control signal the distance conversion unit calculates the distance between the system and the object and provides the calculated distance by means of the distance indication signal.

By using ultrasonic signals the risk of influencing radio transmission of a communication device is greatly reduced, especially in comparison with capacitive sensing. Furthermore, the need for extra holes in the face plate of the system as in the case of an infrared sensing is removed. The device equipped with the distance conversion unit advantageously enables gesture recognition to realize, for example, silence ringing. On the basis of the measured distance between the device and any object or obstruction specific user interface sensing functionality can be inhibited or authorized.

In an exemplary scenario of a device having a touch screen, touch screen functionality may be inhibited to avoid false actions from the user when the device approaches close to the head of the user. In another example application the backlight of the device's screen can be extinguished when a cover, such as a carry case, is detected. Thereby waste of valuable energy from the battery is avoided.

The text below explains the invention in detail using exemplary embodiments with reference to the drawings. Components and circuit elements that are functionally identical or have the identical effect bear identical reference numbers. In so far as circuit parts or components correspond to one another in function, a description of them will not be repeated in each of the following figures.
- Figure 1: shows an exemplary embodiment of a battery powered mobile device according to the proposed principle,
- Figure 2: shows another exemplary embodiment of a battery powered mobile device according to the proposed principle.

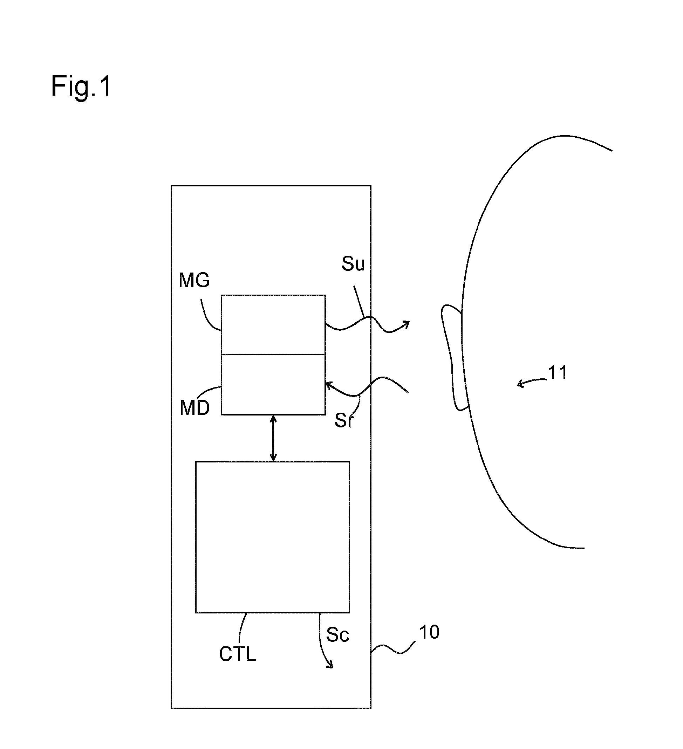

Figure 1 shows an exemplary embodiment of a battery powered mobile device for detecting a time difference according to the proposed principle. The battery powered mobile device 10 comprises a generator MG for generating an ultrasonic signal Su, a detector MD for detecting a reflected signal Sr and a control unit CTL which is connected to the generator MG and to the detector MD in order to respectively control the generator MG and the detector MD. The control unit CTL is prepared to provide a control signal Sc.

Driven by the control unit CTL the generator MD generates the ultrasonic signal Su. The ultrasonic signal Su encounters an object 11 which causes a reflection of the ultrasonic signal Su in the form of the reflected signal Sr. In this example the object 11 is the head of the user of the device 10, specifically his ear. The reflected signal Sr is detected in the detector MD. The control unit CTL computes the difference in time between the ultrasonic signal Su and the reflected signal Sr and provides the result in the form of the control signal Sc.

By this simple time difference measurement calculation of the distance between the device 10 and the object 11 is enabled without complicated time of flight measurement as in the case of infrared sensing and without influencing the radio transmissions of the device as in the case of capacitive sensing.

Thereby the control unit CTL can be realized, for example, as a microcontroller.

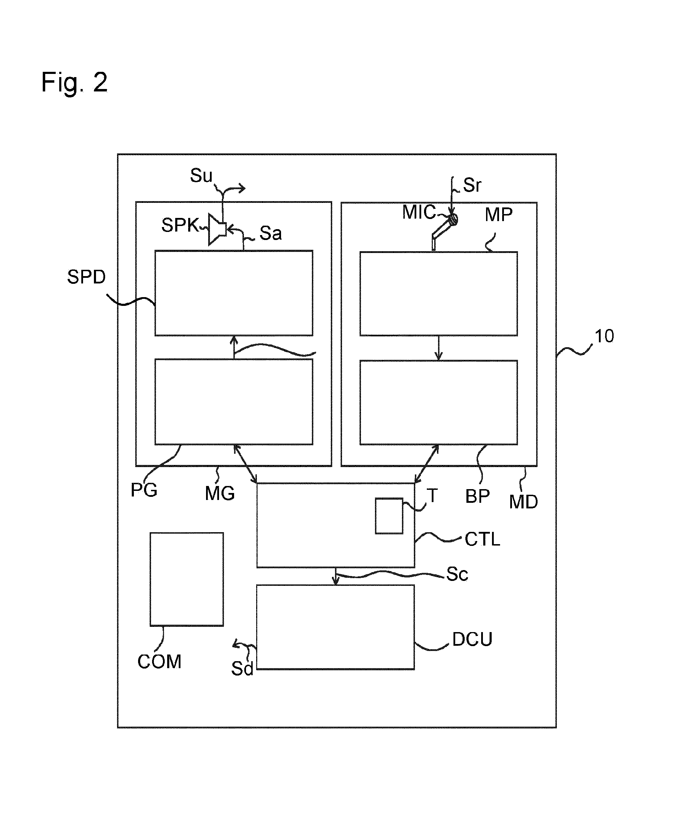

Figure 2 shows another exemplary embodiment of a battery powered mobile device according to the proposed principle. This embodiment is consistent with the embodiment of Figure 1. In addition the battery powered mobile device of the embodiment depicted in Figure 2 comprises a distance conversion unit DCU which is connected to the control unit CTL and a communication unit COM. The communication unit COM provides all functionality necessary for communication of the device 10 with any other device according to the principles of basic telecommunication known to a person skilled in the art.

Furthermore, the generator MG and the detector MD are shown in more detail. The generator MG comprises a speaker SPK, a speaker driver circuit SPD connected to the speaker SPK and a pulse generator circuit PG connected to the speaker driver circuit SPD. The pulse generator circuit PG is coupled to the control unit CTL. The generator MD comprises a microphone MIC, a pre-amplifier circuit MP coupled to the microphone MIC and a band pass filter circuit BP coupled to the preamplifier circuit MP. The band pass filter circuit BP is further coupled to the control unit CTL.

In control of the control unit CTL the pulse generator circuit PG generates a pulsed signal Sp which is provided to the speaker driver circuit SPD. The speaker driver circuit SPD accordingly generates a driving signal Sa such that the membrane of the speaker SPK is excited to emit the ultrasonic signal Su with a frequency higher than 20 KHz. The ultrasonic signal Su is reflected by an object or an obstruction in the form of the reflected signal Sr. The reflected signal Sr is detected and recorded by the microphone MIC. Subsequently, it is preamplified in the preamplifier circuit MP, filtered in the band pass filter circuit BP and finally provided to the control unit CTL. The control unit CTL comprises a timer component T which calculates the time difference between the ultrasonic signal Su and the reflected signal Sr. The result is provided in the form of the control signal Sc to the distance conversion unit DCU. The distance conversion unit DCU computes the distance between the device 10 and the object using the time difference and provides a distance indication signal Sd as a result.

The distance indication signal Sd can subsequently be used within the device 10 to inhibit or to authorize specific functions in the presence of the detected object. Furthermore, gesture recognition is enabled with the proposed solution.

The invention is not limited to specific embodiments by the description on the basis of said exemplary embodiments but comprises any combination of elements of different embodiments. Moreover, the invention comprises any combination of claims and any combination of features disclosed by the claims.

### Reference list

- 10: battery powered mobile device
- 11: object
- MG: generator
- MD: detector
- CTL: control unit
- DCU: distance conversion unit
- SPK: speaker
- SPD: speaker driver circuit
- PG: pulse generator circuit
- MIC: microphone
- MP: preamplifier circuit
- BP: band pass filter circuit
- T: timer component
- COM: communication unit
- Su: ultrasonic signal
- Sr: reflected signal
- Sc: control signal
- Sd: distance indication signal
- Sp: pulsed signal
- Sa: driving signal

## Claims

1. Battery powered mobile device (10) for detecting a time difference having
- a generator (MG) for generating an ultrasonic signal (Su),
- a detector (MD) for detecting a reflected signal (Sr), the reflected signal (Sr) depending on a reflection of the ultrasonic signal (Su) off an object (11), and
- a control unit (CTL) connected to the generator (MG) and to the detector (MD), the control unit (CTL) having an output for providing a control signal (Sc) as a function of a time difference between the ultrasonic signal (Su) and the reflected signal (Sr).

2. Device (10) according to claim 1,
wherein the ultrasonic signal (Su) comprises a frequency higher than 20 kHz.

3. Device (10) according to claim 1 or 2,
wherein the control signal (Sc) comprises a number of counts amounting to the time difference between generation of the ultrasonic signal (Su) and reception of the reflected signal (Sr).

4. Device (10) according to any of claims 1 to 3,
wherein the generator (MG) and the detector (MD) are arranged adjacent to each other.

5. Device (10) according to any of claims 1 to 4,
wherein the generator (MG) comprises a speaker or a microphone adapted to generate ultrasonic frequencies.

6. Device (10) according to claim 5,
wherein the speaker of the generator (MG) is further adapted to generate audio frequencies.

7. Device (10) according to claims 5 or 6,
wherein the generator (MG) further comprises a speaker driver circuit (SPD) coupled to the speaker or microphone and a pulse generator circuit (PG) coupled to the speaker driver circuit (SPD), the pulse generator circuit (PG) being controlled by the control unit (CTL).

8. Device (10) according to any of claims 1 to 7,
wherein the detector (MD) comprises a speaker or a microphone adapted to be excited by ultrasonic frequencies.

9. Device (10) according to claim 8,
wherein the microphone of the detector (MD) is further adapted to be exited by audio frequencies.

10. Device (10) according to claims 8 or 9,
wherein the detector (MD) further comprises a preamplifier circuit (MP) coupled to the speaker or the microphone and a band pass filter circuit (BP) connected to the preamplifier circuit (MP), the band pass filter circuit (BP) being controlled by the control unit (CTL).

11. Device (10) according to any of claims 1 to 10,
wherein the generator (MG) and the detector (MD) are realized in one component.

12. Device (10) according to any of claims 1 to 11,
wherein the control unit (CTL) comprises a timer component (T) for calculation of the time difference between the ultrasonic signal (Su) and the reflected signal (Sr).

13. Device (10) according to any of claims 1 to 12,
wherein the device further has a communication unit (COM) for communicating with another communications device.

14. Device (10) according to any of claims 1 to 13, further having a distance conversion unit (DCU) connected to the control unit (CTL),
wherein the distance conversion unit (DCU) is enabled to provide a distance indication signal (Sd) as a function of the control signal (Sc), the distance indication signal (Sd) being indicative of a distance between the device (10) and the object (11).
